# FASCICULE DE BREVET EUROPEEN

(11) **EP 1 193 444 B1**
(45) Date de publication et mention de la délivrance du brevet: **30.10.2013**
(21) Numéro de dépôt: 01402311.3
(22) Date de dépôt: 06.09.2001
(51) Int. Cl.: F23J 7/00, F23J 15/00, B01D 53/50, B01D 53/62

(54) **PROCÉDÉ POUR RÉDUIRE SIMULTANÉMENT LES ÉMISSIONS DE CO2 ET DE SO2 DANS UNE INSTALLATION DE COMBUSTION**
VERFAHREN ZUR GLEICHZEITIGEN VERMINDERUNG DER CO2- UND SO2-EMISSIONEN IN EINER VERBRENNUNGSANLAGE
METHOD FOR SIMULTANEOUSLY REDUCING CO2 AND SO2 EMISSIONS IN A COMBUSTION PLANT

(30) Priorité: 27.09.2000 FR 0012288
(43) Date de publication de la demande: 03.04.2002
(73) Titulaire: Alstom Technology Ltd, 5400 Baden (CH)
(72) Inventeur: Beal, Corinne, 78960 Voisins Le Bretonneux (FR); Morin, Jean-Xavier, 45170 Neuville Aux Bois (FR); VanDycke, Michel, 78950 Gambais (FR)
(74) Mandataire: Pesce, Michele

(56) Documents cités:
- EP-A- 0 487 102
- EP-A- 0 815 922
- WO-A-85/02453
- US-A- 4 469 033
- US-A- 4 867 955
- US-A- 5 958 353

## Description

L'invention concerne les installations de combustion de matières carbonées, par exemple des combustibles fossiles ou des déchets, dans un foyer, notamment un foyer fonctionnant en lit fluidisé. Elle porte plus particulièrement sur un procédé pour réduire à la fois les émissions de dioxyde de carbone (CO₂) et de dioxyde de soufre (SO₂) dans les fumées de combustion produites par ce genre d'installation.

Un tel procédé est connu du document WO 85/02453.

On sait que la combustion des combustibles fossiles comme le charbon ou des déchets, produit des émissions gazeuses de CO₂ et de SO₂ et que l'injection de calcaire (CaCO₃) au niveau du foyer permet de réduire in situ les émissions de SO₂. Mais cette réduction du SO₂ s'accompagne d'une production de CO₂ qui vient s'ajouter au CO₂ provenant de la combustion des matières carbonées. Or le CO₂ est un gaz à effet de serre qui semble contribuer au réchauffement de la planète.

Par ailleurs, l'injection de calcaire pour la désulfuration des fumées a pour inconvénient de produire dans le foyer une grande quantité de cendres trop riches en sulfate de calcium (CaSO₄) et en chaux (CaO) pour être valorisées facilement.

Le but de l'invention est de remédier à ces inconvénients.

A cet effet, l'invention a pour objet un procédé pour réduire simultanément les émissions de dioxyde de carbone et de dioxyde de soufre produites par la combustion de matières carbonées dans un foyer, caractérisé en ce qu'il consiste à injecter dans le foyer un agent à base de calcium dont une partie absorbe le SO₂ après décarbonatation, puis à faire séjourner et mettre en contact dans un premier réacteur les fumées de combustion, après un refroidissement intermédiaire, avec l'autre partie de l'absorbant n'ayant pas réagi avec le SO₂ pour capter le CO₂ dans les fumées par carbonatation, puis à extraire dans un séparateur les solides contenus dans les fumées en sortie du premier réacteur pour les traiter thermiquement dans un second réacteur afin d'en extraire le CO₂ par décarbonatation et recycler vers le premier réacteur l'absorbant de CO₂ ainsi régénéré.

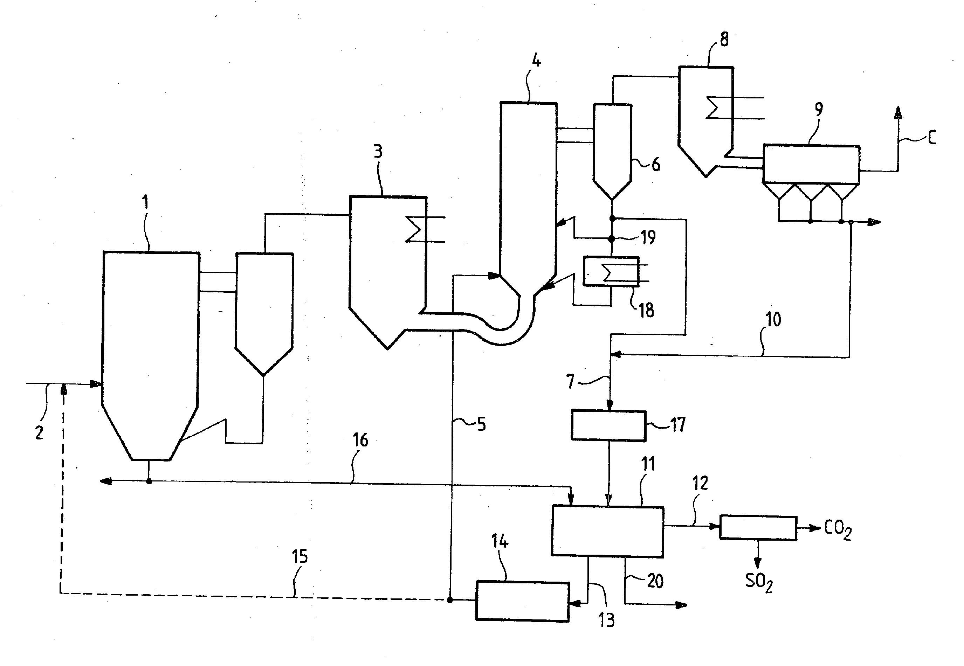

Un exemple de mise en oeuvre du procédé selon l'invention est décrit ci-après plus en détail et illustré sur la figure unique.

La combustion de matières carbonées comme des combustibles fossiles ou des déchets produit des émissions gazeuses de CO₂ et de SO₂. La combustion en lit fluidisé par exemple permet d'obtenir de façon connue une désulfuration efficace des fumées lorsqu'on injecte dans le foyer un absorbant à base de calcium comme le calcaire, cette désulfuration s'opérant suivant les réactions suivantes :

CaCO₃ -> CaO + CO₂ (décarbonatation)

CaO + SO₂ +1/2O₂ -> CaSO₄

Cette combustion en lit fluidisé a donc pour inconvénient de genérer du CO₂, qui vient s'ajouter à celui résultant de l'oxydation du carbone organique provenant du combustible.

Il est par ailleurs connu que le CO₂ est un gaz à effet de serre dont la concentration s'accroît dans l'atmosphère ce qui pourrait contribuer au réchauffement de la terre. Un second inconvénient de cette combustion en lit fluidisé réside dans la quantité de cendres produites qui sont riches en CaSO₄ et CaO, ce qui en limite leur utilisation.

L'invention permet de minimiser ces inconvénients en réduisant, d'une part, de façon significative les émissions de CO₂ venant de la décarbonation du calcaire et de l'oxydation du carbone organique, et d'autre part, en permettant une régénération de l'absorbant. L'idée à la base de l'invention est d'utiliser le CaO en excès dans les cendres pour capter le CO₂ dans les fumées de combustion.

En se reportant à la figure, on injecte comme agent absorbant du calcaire 2 dans le foyer 1 qui est ici un foyer à lit fluidisé circulant. Ce foyer, qui fonctionne à une température d'environ 850°C, est muni d'un séparateur de particules de type cyclone qui retourne les particules vers le bas du foyer. Les fumées produites en sortie du foyer sont chargées de CaO et traversent une chaudière de récupération 3 en vue d'abaisser leur température dans une plage comprise entre 800 et 400°C, typiquement 650°C. Les fumées chargées en CaO ainsi refroidies pénètrent dans un réacteur 4 dans lequel est réinjecté l'agent absorbant régénéré 5 comme indiqué plus bas qui est en partie constitué par la partie de l'agent absorbant 2 n'ayant pas réagi avec le SO₂ dans le foyer 1. Dans le réacteur 4, les fumées séjournent et sont mises en contact avec cet agent absorbant régénéré et la CaO contenue dans les fumées entrantes pour capter le CO₂ contenu dans les fumées selon la réaction suivante :

CaO + CO₂ -> CaCO₃ (carbonatation)

Les solides présents dans les fumées sortant du réacteur 4 sont extraits partiellement dans un séparateur gaz/solides 6, par exemple un cyclone.

Le réacteur 4 et le séparateur 6 associé est par exemple un réacteur à lit fluidisé rapide à recirculation caractérisé par un temps de séjour des gaz dépendant du rendement de captation du CO₂ recherché. Celui-ci est typiquement compris entre 20% et 80% avec des temps de séjour des gaz inférieurs à 10 secondes et des temps de séjours des solides de plusieurs minutes.

Le réacteur 4 peut comporter sous le séparateur 6 un échangeur de chaleur à particules 18 et une vanne de sortie 19 à débit ajustable permettant de régler la température dans le réacteur 4 afin d'optimiser la réaction exothermique d'absorption du CO₂ et la température dans le réacteur 11, cette recirculation vers le réacteur 4 servant à augmenter le temps de séjour du CaO dans le réacteur 4. Plus particulièrement, la vanne 19 est disposée entre le séparateur 6 et l'échangeur de chaleur à particules 18 dans lequel une partie des solides en sortie du séparateur 6 est refroidie avant d'être réinjectée dans le réacteur 4.

Les fumées partiellement épurées en CO₂ qui quittent le séparateur 6, traversent ensuite une seconde chaudière de récupération 8, où elles sont refroidies de façon classique aux environs de 120°C et traversent ensuite un dépoussiéreur final 9 avant d'être libérées dans l'atmosphère par une cheminée en C. Les solides 10 collectés dans le dépoussiéreur 9 sont partiellement recyclés et mélangés avec les solides 7 en sortie du séparateur 6 dans un réacteur 11 chauffé à une température supérieure à la température du réacteur 4, typiquement supérieure à 800°C, pour permettre la libération de CO₂ selon les réactions suivantes :

CaCO₃ -> CaO + CO₂ (décarbonatation)

En augmentant encore plus la température dans le réacteur 11, on pourra obtenir une libération de SO₂ complémentaire

En variante, un prétraitement des solides 7 et 10 avant qu'ils soient envoyés dans le réacteur 11, par exemple à l'eau dans une enceinte 17, permettrait d'abaisser la température de fonctionnement du réacteur 11.

Le gaz 12 produit par le réacteur 11 est essentiellement un mélange de CO₂ et de SO₂. Ces deux composants peuvent être séparés l'un de l'autre en vue d'une utilisation ultérieure ou pour un stockage souterrain.

Les solides 13 extraits du réacteur 11 qui contiennent une forte proportion de CaO sont éventuellement traités dans une enceinte 14 en vue d'améliorer leur réactivité pour la captation du CO₂ et du SO₂, par exemple par ajout d'eau ou de vapeur d'eau ou par ajout d'un promoteur de réaction comme les sels de sodium, avant d'être renvoyés dans le réacteur 4 ou dans le foyer 1. Par ailleurs, dans l'enceinte 14, les solides peuvent être refroidis pour faciliter leur transport. C'est par conséquent dans le réacteur 11 que l'absorbant de CO₂ est régénéré pour être recyclé vers le réacteur 4.

De façon à minimiser la consommation de calcaire 2, une petite partie (15) des solides 13 est recyclée vers le foyer 1. Une fraction 16 des cendres usuellement extraites du lit fluidisé en partie inférieure du foyer 1 peut être réinjectée vers le réacteur 11.

Le réacteur 11 est équipé de préférence d'une purge 20 permettant d'extraire si nécessaire les solides en excès afin de réguler la charge en solides du réacteur 4. La granulométrie de l'agent absorbant 2 est ajustée par broyage de manière à optimiser la quantité d'agent absorbant contenu dans les fumées qui s'échappent du foyer 1.

L'agent absorbant 2 injecté dans le foyer 1 pourrait avantageusement être de la dolomie contenant du carbonate de magnésium, ce qui permettrait d'abaisser la température de fonctionnement du réacteur 11 et de bénéficier d'une énergie de décarbonatation plus faible. Plus généralement, l'agent 2 pourrait être un alcalino-terreux qui se comporte de la même façon que le calcaire mais à des températures différentes.

L'invention n'est pas limitée à la combustion en lit fluidisé. Elle s'applique à différents modes de combustion, notamment à charbon pulvérisé, et de façon plus générale aux traitements des fumées contenant du CO₂ produit par un foyer de combustion dans lequel on injecte un absorbant.

Le procédé selon l'invention peut s'appliquer aux installations existantes à chaudière de récupération 3 par une adaptation relativement simple de la chaudière de façon à la coupler au réacteur 4.

## Revendications

1. Un procédé pour réduire simultanément les émissions de dioxyde de carbone (CO₂) et de dioxyde de soufre (SO₂) produites par la combustion de matières carbonées dans un foyer (1), consistant à injecter dans le foyer (1) un agent (2) à base de calcium dont une partie absorbe le SO₂ après décarbonatation, puis à faire séjourner et mettre en contact dans un premier réacteur (4) les fumées de combustion, après un refroidissement intermédiaire, avec l'autre partie de l'absorbant n'ayant pas réagi avec le SO₂ pour capter le CO₂ dans les fumées par carbonatation, puis à extraire dans un séparateur (6) les solides contenus dans les fumées en sortie du premier réacteur (4) pour les traiter thermiquement dans un second réacteur (11) afin d'en extraire le CO₂ par décarbonatation et recycler vers le premier réacteur (4) l'absorbant de CO₂ ainsi régénéré.

2. Le procédé selon la revendication 1, dans lequel les fumées sortant du séparateur (6) sont envoyées dans un dépoussiéreur (9) et les solides extraits du dépoussiéreur (9) sont partiellement mélangés avec les solides extraits du séparateur (6) avant d'être traités thermiquement dans le second réacteur (11).

3. Le procédé selon la revendication 1 ou 2, dans lequel les fumées sortant du séparateur (6) sont refroidies dans une chaudière de récupération (8) avant d'être envoyées dans le dépoussiéreur (9).

4. Le procédé selon l'une des revendications 1 à 3, dans lequel avant d'être envoyés vers le second réacteur (11), la température des solides est abaissée dans une première enceinte (17) par un traitement à l'eau.

5. Le procédé selon l'une des revendications 1 à 4, dans lequel une partie des solides (13) en sortie du second réacteur (11) est réinjectée dans le foyer (1).

6. Le procédé selon l'une des revendications 1 à 5, dans lequel une partie des cendres prélevées du foyer (1) est envoyée dans le second réacteur (11).

7. Le procédé selon l'une des revendications 1 à 6, dans lequel les solides (13) en sortie du second réacteur (11) sont traités dans une seconde enceinte (14) pour améliorer leur réactivité avant d'être réinjectés dans le foyer (1) ou dans le premier réacteur (4).

8. Le procédé selon la revendication 7, dans lequel la réactivation des solides dans la seconde enceinte (14) est effectuée par ajout de sels alcalins.

9. Le procédé selon l'une des revendications 1 à 8, dans lequel une partie des solides en sortie du séparateur (6) est réinjectée à travers une vanne à débit ajustable (19) dans le premier réacteur (4).

10. Le procédé selon l'une des revendications 1 à 9, dans lequel une partie des solides en sortie du séparateur (6) est refroidie dans un échangeur de chaleur à particules solides (18) puis est réinjectée dans le premier réacteur (4).

11. Le procédé selon l'une des revendications 1 à 10, dans lequel le premier réacteur (4) est un réacteur à lit fluidisé.

12. Le procédé selon l'une des revendications 1 à 11, dans lequel le foyer (1) est un foyer à lit fluidisé circulant.

13. Le procédé selon l'une des revendications 1 à 12, dans lequel l'absorbant est du calcaire.

14. Le procédé selon l'une des revendications 1 à 12, dans lequel l'absorbant est un alcalino-terreux et en particulier de la dolomie.

## Patentansprüche

1. Verfahren zur gleichzeitigen Verringerung der Emissionen von Kohlendioxid (CO₂) und von Schwefeldioxid (SO₂), die durch die Verbrennung von kohlenstoffhaltigen Substanzen in einem Brennraum (1) erzeugt werden, das darin besteht, in den Brennraum (1) einen Wirkstoff (2) auf der Basis von Calcium zu injizieren, von dem ein Teil das SO₂ nach Dekarbonatisierung absorbiert, dann die Verbrennungsrauchgase nach einer Zwischenkühlung mit dem anderen Teil des Absorptionsmittels, der nicht mit dem SO₂ reagiert hat, in einem ersten Reaktor (4) verweilen zu lassen und in Kontakt zu bringen, um das CO₂ in den Rauchgasen durch Karbonatisierung aufzufangen, dann in einem Separator (6) die am Ausgang des ersten Reaktors (4) in den Rauchgasen enthaltenen Feststoffe zu entnehmen, um sie in einem zweiten Reaktor (11) wärmezubehandeln, um das CO₂ durch Dekarbonatisierung daraus zu entnehmen und das so regenerierte CO₂-Absorptionsmittel zum ersten Reaktor (4) rückzuführen.

2. Verfahren nach Anspruch 1, wobei die aus dem Separator (6) austretenden Rauchgase in einen Entstauber (9) geschickt und die aus dem Entstauber (9) entnommenen Feststoffe teilweise mit den aus dem Separator (6) entnommenen Feststoffe gemischt werden, ehe sie im zweiten Reaktor (11) wärmebehandelt werden.

3. Verfahren nach Anspruch 1 oder 2, wobei die aus dem Separator (6) austretenden Rauchgase in einem Rückgewinnungskessel (8) abgekühlt werden, ehe sie in den Entstauber (9) geschickt werden.

4. Verfahren nach einem der Ansprüche 1 bis 3, wobei, ehe sie zum zweiten Reaktor (11) geschickt werden, die Temperatur der Feststoffe in einem ersten Raum (17) durch eine Behandlung mit Wasser gesenkt wird.

5. Verfahren nach einem der Ansprüche 1 bis 4, wobei ein Teil der Feststoffe (13) am Ausgang des zweiten Reaktors (11) in den Brennraum (1) rückgespeist wird.

6. Verfahren nach einem der Ansprüche 1 bis 5, wobei ein Teil der aus dem Brennraums (1) entnommenen Asche in den zweiten Reaktor (11) geschickt wird.

7. Verfahren nach einem der Ansprüche 1 bis 6, wobei die Feststoffe (13) am Ausgang des zweiten Reaktors (11) in einem zweiten Raum (14) behandelt werden, um ihre Reaktivität zu verbessern, ehe sie in den Brennraum (1) oder den ersten Reaktor (4) rückgespeist werden.

8. Verfahren nach Anspruch 7, wobei die Reaktivierung der Feststoffe im zweiten Raum (14) durch Hinzufügung von Alkalisalzen durchgeführt wird.

9. Verfahren nach einem der Ansprüche 1 bis 8, wobei ein Teil der Feststoffe an Ausgang des Separators (6) über ein Ventil mit einstellbarem Durchsatz (19) in den ersten Reaktor (4) rückgespeist wird.

10. Verfahren nach einem der Ansprüche 1 bis 9, wobei ein Teil der Feststoffe am Ausgang des Separators (6) in einem Feststoffteilchen-Wärmetauscher (18) gekühlt und dann in den ersten Reaktor (4) rückgespeist wird.

11. Verfahren nach einem der Ansprüche 1 bis 10, wobei der erste Reaktor (4) ein Wirbelschichtreaktor ist.

12. Verfahren nach einem der Ansprüche 1 bis 11, wobei der Brennraum (1) ein Brennraum mit zirkulierender Wirbelschicht ist.

13. Verfahren nach einem der Ansprüche 1 bis 12, wobei das Absorptionsmittel Kalkstein ist.

14. Verfahren nach einem der Ansprüche 1 bis 12, wobei das Absorptionsmittel ein Erdalkali und insbesondere Dolomit ist.

## Claims

1. Method for simultaneously reducing the emissions of carbon dioxide (CO₂) and sulphur dioxide (SO₂) produced by the combustion of materials containing carbon in a furnace (1), consisting in injecting into the furnace (1) a calcium-based agent (2), a part of which absorbs the SO₂ after decarbonation, then in making the combustion fumes dwell and come in contact in a first reactor (4), after intermediate cooling, with the other part of the absorbent which has not reacted with the SO₂, in order to capture the CO₂ in the fumes by carbonation, then in extracting in a separator (6) the solids contained in the exit fumes of the first reactor (4) in order to thermally treat them in a second reactor (11) so as to extract the CO₂ therefrom by decarbonation and recycle to the first reactor (4) the CO₂ absorbent thus regenerated.

2. Method according to Claim 1, wherein the fumes leaving the separator (6) are sent into a deduster (9) and the solids extracted from the deduster (9) are partially mixed with the solids extracted from the separator (6) before being thermally treated in the second reactor (11).

3. Method according to Claim 1 or 2, wherein the fumes leaving the separator (6) are cooled in a recuperation boiler (8) before being sent into the deduster (9).

4. Method according to one of Claims 1 to 3, wherein, before they are sent to the second reactor (11), the temperature of the solids is lowered in a first chamber (17) by treatment with water.

5. Method according to one of Claims 1 to 4, wherein a part of the solids (13) at the exit of the second reactor (11) is reinjected into the furnace (1).

6. Method according to one of Claims 1 to 5, wherein a part of the ash taken from the furnace (1) is sent into the second reactor (11).

7. Method according to one of Claims 1 to 6, wherein the solids (13) at the exit of the second reactor (11) are treated in a second chamber (14) in order to improve their reactivity before being reinjected into the furnace (1) or into the first reactor (4).

8. Method according to Claim 7, wherein the reactivation of the solids in the second chamber (14) is carried out by adding alkali metal salts.

9. Method according to one of Claims 1 to 8, wherein a part of the solids at the exit of the separator (6) is reinjected through an adjustable-flowrate valve (19) into the first reactor (4).

10. Method according to one of Claims 1 to 9, wherein a part of the solids at the exit of the separator (6) is cooled in a solid-particle heat exchanger (18) then is reinjected into the first reactor (4).

11. Method according to one of Claims 1 to 10, wherein the first reactor (4) is a fluidized-bed reactor.

12. Method according to one of Claims 1 to 11, wherein the furnace (1) is a circulating fluidized-bed furnace.

13. Method according to one of Claims 1 to 12, wherein the absorbent is limestone.

14. Method according to one of Claims 1 to 12, wherein the absorbent is an alkaline earth, and in particular dolomite.
